# EUROPEAN PATENT APPLICATION

(11) **EP 4 685 041 A1**
(43) Date of publication of application: **28.01.2026**
(21) Application number: 25192275.3
(22) Date of filing: 28.07.2025
(51) Int. Cl.: B62K 19/36

(54) **DROPPER SEATPOST ASSEMBLY WITH ADJUSTABLE TRAVEL BY RADIAL INSERT**

(30) Priority: 26.07.2024 US 202463676255 P; 25.07.2025 US 202519280718
(71) Applicant: Fox Factory, Inc., Duluth, GA 30097 (US)
(72) Inventor: Otterness, Christopher, Duluth, 30097 (US); Coaplen, Joshua, Duluth, 30097 (US); Pollock, Thomas, Duluth, 30097 (US)
(74) Representative: Greaves Brewster LLP

(57) **Abstract**

A radial insert travel adjustable dropper seatpost assembly (500) comprising:
a lower post (515), said lower post (515) comprising a travel adjustment opening (525) therethrough;
an upper post (510) configured to interactively operate with respect to said lower post (515), said upper post (515) comprising a travel adjust interface (555); and
at least one radial travel adjust insert (530) installed from an exterior of said lower post (515) and within said travel adjustment opening (525), said at least one radial travel adjust insert (530) to interact with said travel adjust interface (555) of said upper post (510) to reduce a travel distance of said interactive operation of said upper post (510) with respect to said lower post (515).

## Description

This application claims priority from U.S. Provisional patent application no. 63/676,255 filed 26 July 2024, and from U.S. patent application no. 19/280,718 filed 25 July 2025.

### TECHNICAL FIELD

Embodiments of the invention generally relate to systems and methods for utilizing a dropper seatpost assembly.

### BACKGROUND

Seat (or saddle) height and orientation are important parts of a vehicle setup (such as a bike, unicycle, tricycle, electric bike (e-bike), and the like). If the saddle is too high, a rider would feel unstable and have difficulty reaching the ground or even the bottom stroke of the pedals. In contrast, if the saddle is too low, the rider sitting in the saddle would feel cramped and would not obtain proper leg extension while pedalling in the seated position. Moreover, what would be considered a good saddle height for riding along a relatively flat surface may not be a good saddle height for climbing a hill, descending a hill, riding across rough terrain, etc. As such, there is no universally applicable saddle geometry settings, instead saddle settings are always subject to rider and use case preferences and geometries.

### SUMMARY OF THE INVENTION

According to some embodiments there is provided a radial insert travel adjustable dropper seatpost assembly. The radial insert travel adjustable dropper seatpost assembly may comprise a lower post. The lower post may comprise a travel adjustment opening therethrough. The radial insert travel adjustable dropper seatpost assembly may comprise an upper post configured to interactively operate with respect to said lower post. The upper post may comprise a travel adjust interface. The radial insert travel adjustable dropper seatpost assembly may comprise at least one radial travel adjust insert installed from an exterior of said lower post and within said travel adjustment opening. The at least one radial travel adjust insert may interact with said travel adjust interface of said upper post to reduce a travel distance of said interactive operation of said upper post with respect to said lower post.

In some embodiments the at least one radial travel adjust insert may interact with said travel adjust interface of said upper post to maintain one or both of an axial orientation and a rotational orientation of said upper post with respect to said lower post.

In some embodiments the travel adjust interface may comprise a negative extrusion formed in said upper post. The travel adjust interface may comprise a separate component inserted in said negative extrusion.

In some embodiments the travel adjust interface may a positive extrusion formed in said upper post.

In some embodiments the radial insert travel adjustable dropper seatpost assembly may comprise a plurality of travel adjustment openings. The plurality of travel adjustment openings may be located at different distances axially along said lower post. The plurality of travel adjustment openings may provide a selectable plurality of different reduced travel distances of said interactive operation of said upper post with respect to said lower post.

In some embodiments the radial insert travel adjustable dropper seatpost assembly may comprise a plurality of travel adjustment openings located radially about said lower post. The radial insert travel adjustable dropper seatpost assembly may comprise a plurality of travel adjust interfaces located radially about said upper post. The radial insert travel adjustable dropper seatpost assembly may comprise a plurality of radial travel adjust inserts removably coupleable with said plurality of travel adjustment openings of said lower post.

In some embodiments the plurality of travel adjustment openings may be symmetrically about said lower post.

In some embodiments the radial insert travel adjustable dropper seatpost assembly may comprise an upper seal between said upper post and said lower post. The radial insert travel adjustable dropper seatpost assembly may comprise an upper seal retainer to retain said upper seal. The upper seal retainer may be coupled with said lower post at an end of said lower post and may interactively operate with said upper post. The at least one radial travel adjust insert may be installable without requiring a removal of said upper seal or said upper seal retainer.

In some embodiments the upper seal retainer may be a collar.

In some embodiments the radial insert travel adjustable dropper seatpost may comprise a spacer chip. The spacer chip may be configured to fit through said travel adjustment opening of said lower post and couple between said at least one radial travel adjust insert and said travel adjust interface of said upper post to reduce said travel distance of said interactive operation of said upper post with respect to said lower post.

In some embodiments the at least one radial travel adjust insert may comprise a first portion to removably couple with said travel adjustment opening of said lower post. The at least one radial travel adjust insert may comprise a second portion to extend within said lower post toward said travel adjust interface of said upper post to further reduce said travel distance of said interactive operation of said upper post with respect to said lower post.

In some embodiments a length of said second portion may be adjustable.

In some embodiments the radial insert travel adjustable dropper seatpost assembly may comprise an external retainer. The external retainer may retain said at least one radial travel adjust insert within said travel adjustment opening.

In some embodiments the external retainer may comprise a radial travel adjust insert storage compartment. The radial travel adjust insert storage compartment may be coupled with said external retainer to store said at least one radial travel adjust insert when said at least one radial travel adjust insert is not installed within said travel adjustment opening.

According to some embodiments there is provided a radial insert travel adjustable dropper seatpost assembly. The radial insert travel adjustable dropper seatpost assembly may comprise a lower post. The lower post may comprise a travel adjustment opening therethrough. The radial insert travel adjustable dropper seatpost assembly may comprise an upper post. The upper post may be configured to interactively operate with respect to said lower post. The upper post may comprise a travel adjust interface. The radial insert travel adjustable dropper seatpost assembly may comprise an upper seal between said upper post and said lower post. The radial insert travel adjustable dropper seatpost assembly may comprise an upper seal retainer. The upper seal retainer may be coupled with said lower post at an end of said lower post and may interactively operate with said upper post, said upper seal retainer to retain said upper seal. The radial insert travel adjustable dropper seatpost assembly may comprise at least one radial travel adjust insert. The at least one radial travel adjust insert may be installed from an exterior of said lower post and within said travel adjustment opening without requiring a removal of said upper seal or said upper seal retainer. The at least one radial travel adjust may interact with said travel adjust interface of said upper post to reduce a travel distance of said interactive operation of said upper post with respect to said lower post.

In some embodiments at least one radial travel adjust insert may interact with said travel adjust interface of said upper post to maintain one or both of an axial orientation and a rotational orientation of said upper post with respect to said lower post.

In some embodiments the travel adjust interface may comprise a negative extrusion formed in said upper post. The travel adjust interface may comprise a separate component inserted in said negative extrusion.

In some embodiments the travel adjust interface may comprise a positive extrusion formed in said upper post.

In some embodiments the radial insert travel adjustable dropper seatpost assembly may comprise a plurality of travel adjustment openings located radially about said lower post.

The radial insert travel adjustable dropper seatpost assembly may comprise a plurality of travel adjust interfaces located radially about said upper post. The radial insert travel adjustable dropper seatpost assembly may comprise a plurality of radial travel adjust inserts removably coupleable with said plurality of travel adjustment openings of said lower post.

According to some embodiments there is provided a radial insert travel adjustable dropper seatpost assembly. The radial insert travel adjustable dropper seatpost assembly may comprise a lower post. The lower post may comprise a travel adjustment opening therethrough. The radial insert travel adjustable dropper seatpost assembly may comprise an upper post. The upper post may be configured to interactively operate with respect to said lower post, The upper post may comprise a travel adjust interface. The radial insert travel adjustable dropper seatpost assembly may comprise an upper seal between said upper post and said lower post. The radial insert travel adjustable dropper seatpost assembly may comprise an upper seal retainer. The upper seal retainer may be coupled with said lower post at an end of said lower post interactively operating with said upper post, said upper seal retainer to retain said upper seal. The radial insert travel adjustable dropper seatpost assembly may comprise at least one radial travel adjust insert. The at least one radial travel adjust insert may be installed radially from an exterior of said lower post and within said travel adjustment opening without requiring a removal of said upper seal or said upper seal retainer. The at least one radial travel adjust may interact with said travel adjust interface of said upper post to reduce a travel distance of said interactive operation of said upper post with respect to said lower post. The radial insert travel adjustable dropper seatpost assembly may comprise an external retainer. The external retainer may retain said at least one radial travel adjust insert within said travel adjustment opening.

According to some embodiments there is provided a dropper seatpost with adjustable travel. The dropper seat post may comprise an upper post. The dropper seatpost may comprise a lower post. A top out key may be constrained to the upper post. The key may be attached to the upper post and top out load will pass through the key. In some embodiments no load may be passed through the key instead passing purely through internal components housed within the upper post. The dropper seatpost may comprise a top out insert. The top out insert may be inserted through a hole/slot in the lower post such that it translates the top out load through the lower post. In some embodiments loads could be transmitted through a top out washer. The dropper seatpost may comprise a face plate or some form of top out insert retention cover. There may be a removeable cover that is used to hide and secure the top out insert into place. This will prevent it from coming out radially. In some embodiments this could also be completed using a bolt on the top out insert or something similar.

As the dropper seatpost extends to top out in the default condition it may top out on internal components or top out through pins/keys on the upper bushing/a top out plate or some other mechanism. If the user would like to decrease the dropper seatpost travel they will be able to compress the dropper seatpost and install a top out insert. The top out insert may be accessed by removing a cover. With the cover removed the insert can be inserted to the desired travel decrease slot and the cover can be re-installed. The dropper seatpost will now top out between the top out insert and the top out key.

In some embodiments the dropper seatpost may include a top out key that is attached to the upper post via a slot, a pocket, a groove, or something similar. This key will move with the upper post as it is compressed and extended. A top out insert may be installed radially, or otherwise through an external (non-axial) pocket into the lower post. This key may be fixed to the lower post to create a place for the top out key to hit. The location of the top out insert determines the travel of the dropper seatpost.

In some embodiments the top out key may be "L" shaped or something similar where the added length may increase the total travel reduction.

It is not essential that the pocket in the lower post must be in the form of a slot or slots either. For example, a larger pocket may be used to fit different inserts.

In some embodiments the dropper seatpost may include multiple inserts to further stroke down the seatpost. These inserts may "stack" on top of the insert key and can either top out on an insert, a top out plate, or the upper bushing. These stacking inserts may also be installed through a hole in the lower post.

Within the lower post some of the top out mechanism can be secured in multiple ways. In some embodiments the insert/key may fit in a specific groove. In other cases the inert/key may fit in the radial space between the upper post OD and the lower post ID (not in a groove). In other cases the spacers may fit in a combination of a groove and the radial space.

According to some embodiments there is provided a vehicle comprising a radial insert travel adjustable dropper seatpost assembly, or a dropper seatpost, as set out above, or as described or as claimed anywhere herein. The vehicle may be in the form of a bicycle, such as, but not limited to, road bike, mountain bike, gravel bike, unicycle, tricycle and electric bike (e-bike).

According to some embodiments there is provided a kit of parts comprising a radial insert travel adjustable dropper seatpost assembly, or a dropper seatpost, as set out above, or as described or as claimed anywhere herein, and at least one radial travel adjust insert for reducing a travel distance of said interactive operation of said upper post with respect to said lower post. The at least one radial travel adjust insert may have any of the at least one radial travel adjust insert features as set out above or as described or as claimed anywhere herein.

In some embodiments the kit of parts may further comprise at least one spacer chip to reduce said travel distance of said interactive operation of said upper post with respect to said lower post. The at least one spacer chip may have any of the at least one spacer chip features as set out above or as described or as claimed anywhere herein.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a perspective view of a bike, in accordance with an embodiment.
Figure 2 is a perspective view of a handlebar with a control lever coupled therewith, in accordance with an embodiment.
Figure 3 is a partial perspective view of the dropper seatpost assembly installed in the seatpost retaining portion of the bike frame of Figure 1, in accordance with an embodiment.
Figure 4A is a perspective view of a dropper seatpost assembly, in accordance with an embodiment.
Figure 4B is a perspective view of a dropper seatpost assembly having a different overall length than the dropper seatpost assembly of Figure 4A, in accordance with an embodiment.
Figure 4C is a perspective view of the dropper seatpost assembly of Figure 4A in a contracted position, in accordance with an embodiment.
Figure 4D is a perspective view of the dropper seatpost assembly of Figure 4A in an extended position, in accordance with an embodiment.
Figure 5A is a perspective view of a radial insert travel adjustable dropper seatpost assembly shown in accordance with an embodiment.
Figure 5B is a side view of the upper post with a travel adjust interface shown in accordance with an embodiment.
Figure 5C is a side view of the lower post with a travel adjustment opening shown in accordance with an embodiment.
Figure 5D is a side view of the upper post with a travel adjust interface cavity and optionally the travel adjust interface shown in accordance with an embodiment.
Figure 5E is a top view of the internal profile of lower post with a wire channel and pin channel shown in accordance with an embodiment.
Figure 6A is a cutaway side view of the radial insert travel adjustable dropper seatpost shown in accordance with an embodiment.
Figure 6B is a closer cutaway side view of the radial insert travel adjustable dropper seatpost shown in accordance with an embodiment.
Figure 6C is a top perspective cutaway view of radial insert travel adjustable dropper seatpost with a level of surface area interaction provided by a radial travel adjust insert shown in accordance with an embodiment.
Figure 6D is a top perspective cutaway view of radial insert travel adjustable dropper seatpost with another level of surface area interaction provided by a radial travel adjust insert shown in accordance with an embodiment.
Figure 7A is a side view of the radial insert travel adjustable dropper seatpost with a plurality of travel adjustment opening(s) shown in accordance with an embodiment.
Figure 7B is a side view of the radial insert travel adjustable dropper seatpost utilizing a different of said plurality of travel adjustment opening(s) shown in accordance with an embodiment.
Figure 8A is a side view of the radial insert travel adjustable dropper seatpost with at least one travel adjustment opening and an external retainer shown in accordance with an embodiment.
Figure 8B is a side view of the radial insert travel adjustable dropper seatpost with an external retainer over at least one travel adjustment opening shown in accordance with an embodiment.
Figure 8C is a cutaway side view of the radial insert travel adjustable dropper seatpost with an external retainer over at least one travel adjustment opening shown in accordance with an embodiment.
Figure 8D is a side view of the radial insert travel adjustable dropper seatpost with an external retainer including a storage location for at least one radial travel adjust insert shown in accordance with an embodiment.
Figure 8E is a side view of the radial insert travel adjustable dropper seatpost with an external retainer including at least one radial travel adjust insert coupled therewith and deployable therefrom shown in accordance with an embodiment.
Figure 9A is a perspective cutaway view of the radial insert travel adjustable dropper seatpost with a larger travel adjustment opening and an elongated radial travel adjust insert shown in accordance with an embodiment.
Figure 9B is a side cutaway view of the radial insert travel adjustable dropper seatpost with a larger travel adjustment opening, an elongated radial travel adjust insert, and a spacer to fill the remaining opening in the travel adjustment opening shown in accordance with an embodiment.
Figure 10A is a perspective view of the upper post with travel adjust interface and an additional spacer chip shown in accordance with an embodiment.
Figure 10B is a side cutaway view of the radial insert travel adjustable dropper seatpost with travel adjust interface and additional spacer chip shown in accordance with an embodiment.
Figure 11A is a top perspective view of an internal profile of the lower post in accordance with an embodiment.
Figure 11B is a top perspective view of another internal profile of the lower post in accordance with an embodiment.
Figure 11C is a top perspective view of yet another internal profile of the lower post in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

### Terminology

In the following discussion, a number of terms and directional language is utilized. Although the technology described herein is useful on a number of vehicles that have a seat, a bicycle (bike) will be used to provide guidance for the terms and directional language. However, it should be appreciated that the embodiments are also well suited for other vehicles such as, but not limited to, road bike, mountain bike, gravel bike, unicycle, tricycle, electric bike (e-bike), and the like

The term "seatpost" refers to a stand-alone component, e.g., a tube or another geometric shaped member that has at least a portion of a head assembly at an end or an approximate end thereof. The head assembly is used to couple a bike saddle with the seatpost.

The term "seat post opening" refers to an opening in a portion of a bike frame within which the seatpost is inserted or otherwise attached.

The term "saddle height" refers to the distance between the top of the saddle (e.g., where a rider would sit) and the ground, or the pedals, or another frame of reference of the bike. For example, a taller rider would normally have a higher saddle height than that of a shorter rider.

The following discussion provides a novel solution to travel adjustable features for a dropper seatpost assembly. Moreover, embodiments described herein provide a dropper seatpost assembly that can be used with a number of different frames, different seatpost clamps, different seatpost clamp torques, and different dropper seatpost assembly designs.

Presently, performing axial travel adjustment requires the user to be comfortable working on a seatpost and includes the removal of the collar assembly to modify the travel as discussed herein. However, when removing the collar the user can possibly scratch the surface of the upper post, this could happen above the bushing or wiper which would decrease the effectiveness of the seatpost. The collar removal will also interfere with the factory set quantity of greases across different interfaces and potentially allows debris to bypass the wiper decreasing the seatpost functionality and durability.

The radial insert travel adjust disclosed herein solves these problems by allowing the radial installation of the travel adjusters externally from the lower post without requiring collar removal. Moreover, since the radial insert travel adjust does not require collar removal, it is able to be used on different dropper seatposts including those that do not use a removeable collar.

Thus, in one embodiment, instead of a seatpost collar, an upper seal retainer is used to retain the upper seal (as well as the collar, upper bushing, and the like) and maintain the interactivity between the upper and lower posts. In one embodiment, the upper seal retainer is pressed, locked, fastened, or otherwise coupled with the lower seat post and is not meant to be user removable. For example, Fox's Transfer Neo seatpost has an upper seal retainer that should not be removed by a consumer due to wiring and/or other constraints.

As discussed herein, the removeable collar requires features such as threads, or bolts that increases the size of the collar (which is a detriment to the user). The collar will need to grow axially or radially. Growing axially decreases the usable drop to a customer. Growing radially decreases clearances to the user's body and to rest of the bike assembly including the rear tire. This is a design constraint in many seatpost designs as customers are unwilling to buy a product that could cause impact to a rear tire during compression. By utilizing a lower profile fixedly coupled upper seal retainer, the size of the assembly is reduced.

Moreover, by allowing the travel adjust insert to be installed radially from the external of the lower post, a user (or installer) is able to see and install the travel adjust key without disassembly of the dropper seatpost including elements such as the collar, wiper, bushing assembly, and the like. In so doing, the dropper seatpost internals are not subject to damage during disassembly, factory set grease is not disturbed, and the internals remain clean from debris and/or contamination.

### Operation

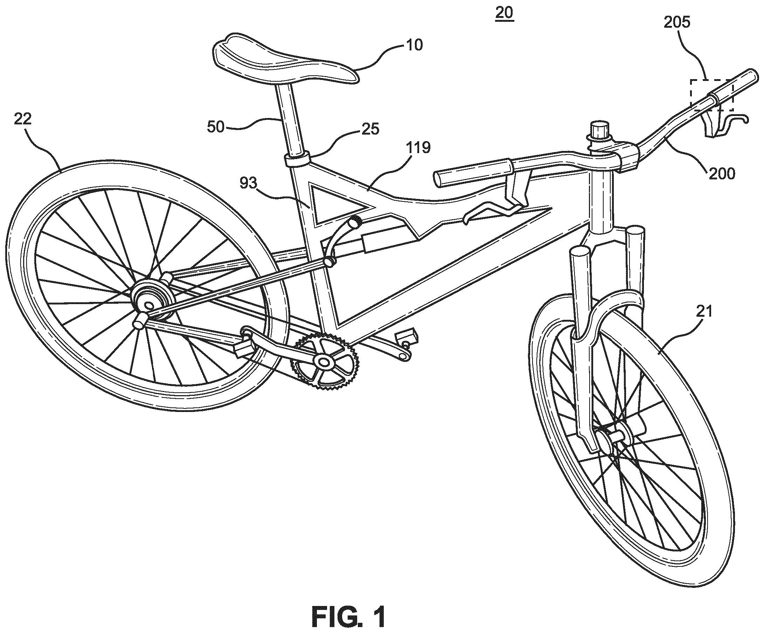

Referring now to Figure 1, a bike 20 is shown in accordance with an embodiment. In general, bike 20 has a front (e.g., the general location of the handlebars 200 and the front wheel 21) and a rear (e.g., the general location of the rear wheel 22). For purposes of the discussion the front and rear of the bike 20 can be considered to be in a first plane. A second plane that is perpendicular to the first plane would be similar to an exemplary flat plane of the ground upon which bike 20 is ridden.

In general, the bike 20 includes pedals, wheels, a chain or other drive mechanism, brakes, an optional suspension, a saddle 10 (or bike seat), handlebars 200, a dropper seatpost assembly 50, a rider interface 205, a frame 119, a seat post opening 93, and a seatpost clamp 25.

When installing a standard seatpost, the seatpost is partially inserted into the seat post opening 93 and then held in position with a clamping member such as seatpost clamp 25. In so doing, a rider is able to adjust the amount of seatpost sticking out of the seat post opening 93; which is directly related to the vertical height of the saddle (e.g., the saddle height- or how far the saddle is above the ground, above the pedals, etc.).

In one embodiment, a head assembly allows the saddle 10 to be adjustably located with respect to the seatpost before and after the seatpost is installed in the seat post opening 93. For example, once the seatpost is installed in the seat post opening 93, the head assembly adjustability will allow a rider to adjust the horizontal location of the saddle 10 (e.g., toward the front or rear of the bike) and the pitch of the saddle 10 (e.g., nose-up, nose-level, nose-down).

In a standard seatpost configuration, part of the bike setup is establishing an appropriate saddle height for a given rider. For example, a rider would have a certain saddle to pedal distance, e.g., a pre-established (hereinafter "normal") saddle height. This normal saddle height is rider specific and can include a number of trials before the rider settles on the normal saddle height. Once the normal saddle height is determined, the seatpost is clamped into a fixed position such that the normal saddle height and saddle 10 orientation is maintained until the seatpost is unclamped.

This modifiable saddle height capability is important to allow different riders to utilize similar components and merely adjust the saddle height by changing the amount of seatpost that is extending from the seat post opening 93. However, as a rider tackles different challenges throughout a given ride, there is a growing need for the capability to make rider-to-bike saddle-height geometry changes.

For example, when going up a hill and/or sprinting, a rider will often take a standing position for additional leverage, power transference, and the like. In another example, when going down a hill (or over rough terrain, if standing for additional leverage, etc.), a rider would likely prefer a shorter saddle to pedal distance (hereinafter lower saddle height) to allow the rider to lower their center of gravity, lean further backward to change the center of gravity of the bike, use their legs to absorb bumps, and the like. As such, it is helpful to be able to adjust the saddle height during a ride.

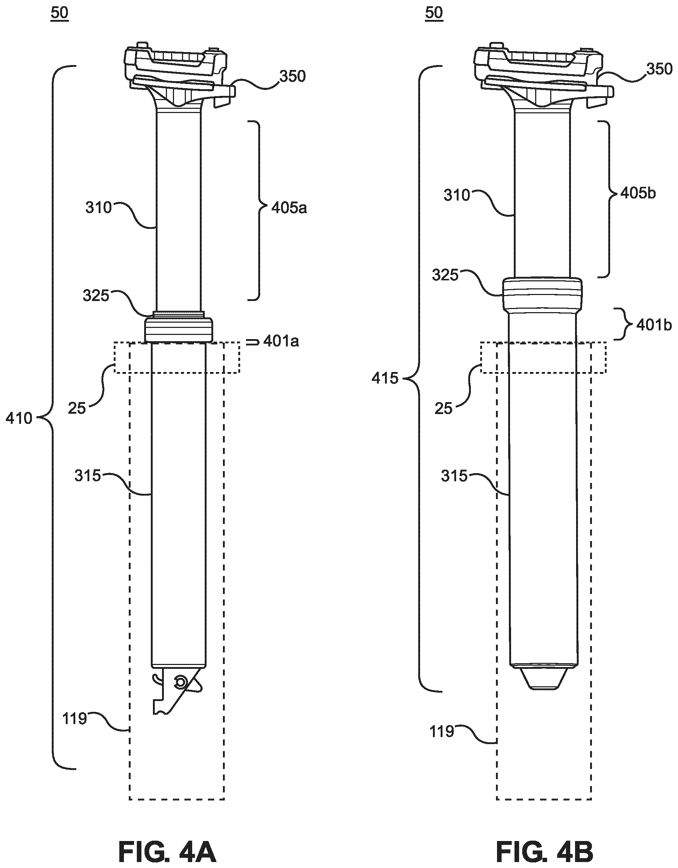

A dropper seatpost assembly (hereinafter dropper seatpost assembly 50) is a seatpost design shown in detail beginning with Figure 4A and described in further detail herein. In one embodiment, the basic dropper seatpost assembly 50 design includes a lower post that is fixedly coupleable to the bike frame and an upper post that is telescopically moveably coupled with the lower post and which includes the head assembly at a top thereof.

In one embodiment, an actuator assembly allows the upper post to be vertically moveable (or adjustable) with respect to the lower post, such that the rider can operate a rider interface 205 (such as a control lever or the like) to "drop" the dropper seatpost assembly 50 to a lowered saddle height and then use the rider interface 205 (which may mean the same (or a different) control lever) to "return" the dropper seatpost assembly 50 to the normal saddle height. In one embodiment, this two-position capability allows a rider to have a normal saddle height and also a lowered saddle height for traversing uphill's, sprints, downhills, bumpy terrain, or the like. Although in one embodiment two positions are mentioned, as discussed in detail herein, in one embodiment, the dropper seatpost assembly 50 could be adjustable to a plurality or an "infinite" number of different saddle height positions. Thus, the use of two positions is merely one embodiment which is used herein for purposes of clarity.

In one embodiment, dropper seatpost assembly 50 is inserted into seat post opening 93 (such as, for example, in one embodiment, via a slip-fit or the like) and seatpost clamp 25 is used to removably couple the dropper seatpost assembly 50 with the seat post opening 93. Once seatpost clamp 25 is tightened, the dropper seatpost assembly 50 and the saddle 10 attached thereto will be removably coupled at a given orientation with respect to frame 119.

In one embodiment, the weight of dropper seatpost assembly 50 is an important guiding principle in the development and manufacture design criteria for dropper seatpost assembly 50. It is often the case (and may also be dependent upon use case) that a lighter dropper seatpost assembly 50 is preferred over a heavier dropper seatpost assembly 50. As such, in one embodiment, areas where weight savings can be obtained in a dropper seatpost assembly 50 design include manufacturing one or more of the dropper seatpost assembly 50 components with a thinner wall thickness, using a lighter material, etc.

With respect to bike frame 119, between bike frame manufacturers, seat post opening 93 diameters can differ in size by a number of millimeters. Thus, a dropper seatpost assembly 50 having a certain diameter could fit snugly within a given frame 119 having a seat post opening 93 with a first diameter, but be somewhat loose in a frame 119 with a seat post opening 93 having a second diameter that is a bit larger than the first diameter. Thus, in one embodiment, where frame 119 has the larger diameter seat post opening 93, the seatpost clamp 25 would need to provide additional clamping force to reduce the diameter of the seat post opening 93 and properly clamp and maintain the orientation of the dropper seatpost assembly 50. However, this increased amount of clamping force on the seat post opening 93 (which is usually made with thicker material than that of the lower post of dropper seatpost assembly 50) would likely also slightly deform the lower post of the dropper seatpost assembly 50 inserted therein.

With respect to seatpost clamp 25, in one embodiment, a rider may upgrade a seatpost clamp 25, replace a seatpost clamp 25 or the like. This replacement or upgrade could be based on wear, age, environment, weight reduction purposes, functional purposes (e.g., heavy duty clamp for more challenging environments or performance requirements), etc. With different seatpost clamps, there can be different torque requirements, different clamping ranges, different pressure application, etc. Thus, for example, the original seatpost clamp 25 may have had a torque required for clamping of 13.6 N m (10 ft-lbs), while the replacement seatpost clamp 25 has a torque required for clamping of 40.7 N m (30 ft-lbs). In one embodiment, the replacement seatpost clamp with the higher torque requirement would therefore have a higher clamping pressure and would likely provide further deformation of the seat post opening 93 which would also likely result in a slight deformation of the lower post of the dropper seatpost assembly 50 after it has been inserted therein and the seatpost clamp 25 has been tightened to the higher clamping pressure.

With respect to dropper seatpost assembly 50 designs, between different dropper seatpost assembly 50 manufacturers, dropper seatpost assembly 50 diameters can differ in size by a number of millimeters. Thus, a dropper seatpost assembly 50 having a certain diameter could properly slip-fit within a given seat post opening 93, but a different dropper seatpost assembly 50 having a smaller diameter would be somewhat loose in the same seat post opening 93. Thus, in the smaller dropper seatpost assembly 50 diameter example, in one embodiment, the seatpost clamp 25 would need to provide additional clamping force to reduce the seat post opening 93 to properly clamp and maintain the dropper seatpost assembly 50. However, this increased amount of clamping force on seat post opening 93 (which is usually thicker material than that of the dropper seatpost assembly 50) would likely also slightly deform the lower post of dropper seatpost assembly 50 that is inserted therein.

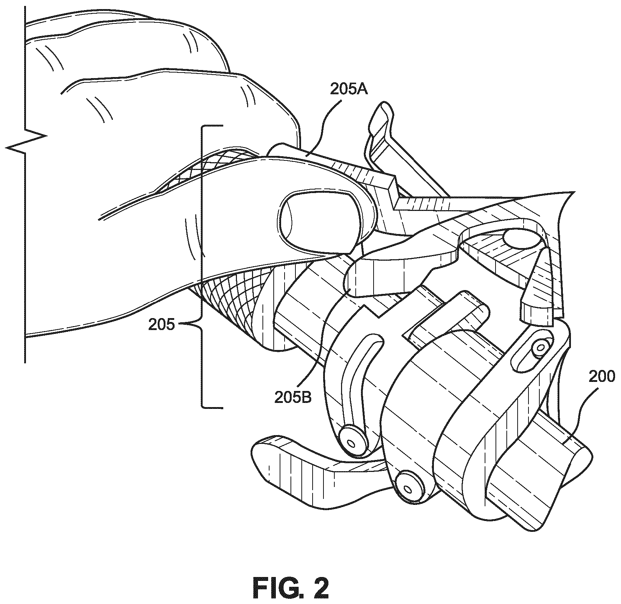

Figure 2 depicts a blown-up portion of handlebar 200 having the rider interface 205 coupled therewith according to an embodiment. The rider interface 205 is a type of rider interface with which the rider employs for communicating saddle height instructions to the dropper seatpost assembly 50. Of note, the rider interface 205 may be, but is not limited to, any of the following components capable of communicating with the dropper seatpost assembly 50: wireless device, power meter, heart rate monitor, voice activation device, GPS device having stored map, graphical user interface (GUI), button, dial, smart phone (e.g., iPhone^{™}), lever, button, or the like. Moreover, although the rider interface 205 is shown coupled with handlebar 200. In another embodiment, the rider interface 205 could be located on another portion of the bike frame 119, on a mount coupled with a portion of the bike frame 119 or handlebar 200, or the like.

The rider interface 205 includes at least one control, such as the first rider interface 205A and may include a second rider interface 205B, it should be understood that in an embodiment, there may be only a single control, or in an embodiment there may be a set of controls. The rider interface 205 is mechanically and/or electronically connected (via wire/cable and/or wirelessly) to various components within the dropper seatpost assembly 50. When the rider moves the rider interface 205, via the connections between the rider interface 205 and the dropper seatpost assembly 50, she is causing a change in mechanical or hydraulic state within the dropper seatpost assembly 50 allowing a change in saddle position relative to the bike frame 119.

Referring now to Figures 1 and 2, in one embodiment, dropper seatpost assembly 50 includes a cable actuator interface. In one embodiment, a control cable couples the cable actuator interface with the control input 205. In general, the control cable can be internally routed, externally routed, or partially internally and externally routed.

For example, in one embodiment of an internally routed control cable configuration, the control cable is affixed to the rider interface 205 and will be run internally through bike frame 119 where it will be accessible at seat post opening 93. The control cable is then coupled with the cable actuator interface of dropper seatpost assembly 50 and will remain within the frame 119 when the dropper seatpost assembly 50 is inserted into seat post opening 93.

In contrast, in one embodiment of an externally routed control cable configuration, the control cable is affixed to the rider interface 205 and will run externally along a portion of bike frame 119 and the control cable with couple with cable actuator interface outside of the bike frame 119 when dropper seatpost assembly 50 is installed on the bike 20.

In the case of a partially internally and externally routed control cable, in one embodiment, as the control cable traverses between dropper seatpost assembly 50 and control input 205 portions of the control cable can be internal to the frame 119 and external to the frame 119.

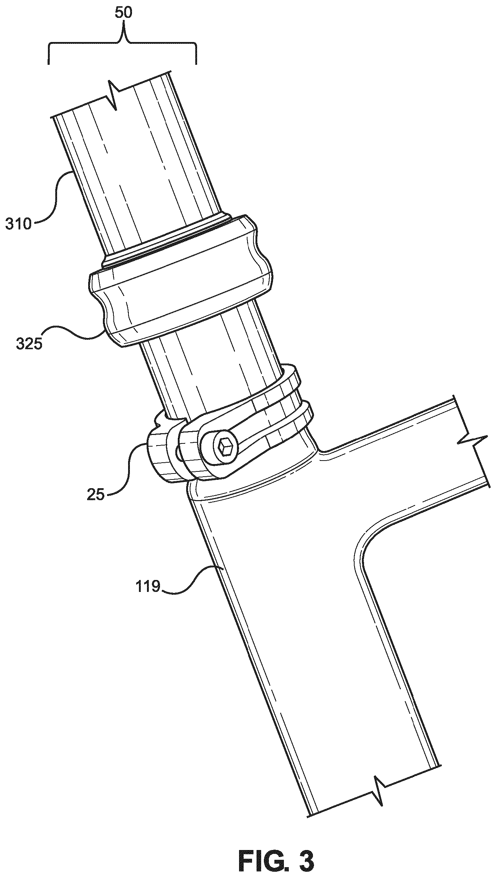

Figure 3 is a partial perspective view of a portion of dropper seatpost assembly 50 installed in the bike frame 119 of Figure 1. In one embodiment, dropper seatpost assembly 50 includes a seatpost collar 325 that is used to limit the distance the dropper seatpost assembly 50 can enter the seat post opening 93 in bike frame 119. In addition, the seatpost collar 325 is used to retain an upper seal between the upper post and the lower post. In one embodiment, instead of a seatpost collar 325, an upper seal retainer is used to retain the upper seal (as well as the collar, upper bushing, and the like) and maintain the connectivity between the upper and lower posts. In one embodiment, the upper seal retainer is not meant to be user removable. For example, Fox Factory, Inc.'s TRANSFER NEO^{™} seatpost has an upper seal retainer (e.g., collar) that should not be removed by a consumer due to wiring and/or other constraints.

Figure 4A is a perspective view of a dropper seatpost assembly 50 shown in accordance with an embodiment. In one embodiment, the dropper seatpost assembly 50 includes an upper post 310, a head assembly 350, a lower post 315, and a seatpost collar 325. Figure 4A also shows an overall length 410, an upper seatpost extended length 405a, and a seating distance 401a that indicates the distance between seatpost retaining clamp 25 and seatpost collar 325.

Referring now to Figures 3 and 4A, in one embodiment, seatpost retaining clamp 25 is used to provide a clamping pressure on the seat post opening 93 of bike frame 119 such that the lower post of dropper seatpost assembly 50 is held fast in both insertion depth and head assembly 350 (and thus saddle 10) orientation.

In other words, the seatpost retaining clamp 25 is loosened to allow the rider to slip-fit (e.g., insert, remove, and orient) the lower post 315 of dropper seatpost assembly 50 into seat post opening 93 of bike frame 119 and once the dropper seatpost assembly 50 is oriented in the proper position, the seatpost retaining clamp 25 is tightened to maintain the orientation of dropper seatpost assembly 50 with respect to bike frame 119.

In one embodiment, the orientation of the dropper seatpost assembly 50 is based on the design of dropper seatpost assembly 50 with respect to the forward and rear of bike frame 119. For example, instead of a linear seatpost design as shown in Figure 4A, in one embodiment, a portion of the dropper seatpost assembly (such as a top portion of upper post 310) will include a geometric feature to allow the saddle to be mounted to the head assembly 350 offset vertically from the seat post opening 93. For example, the offset may be a curve or other geometric feature that provides an offset saddle location of 1 or more centimeters rearward with respect to the location of seat post opening 93. Although an offset saddle location is described as being rearward, it should be appreciated that in one embodiment, the offset may be in a forward facing direction, e.g., toward the front (or handlebars 200) of bike 20.

In one embodiment, the orientation of the dropper seatpost assembly 50 is based on the orientation of saddle 10 with respect to the bike frame 119. For example, the saddle 10 is oriented in a plane approximately parallel to the plane of bike frame 119. In other words, the front and rear of saddle 10 are similarly oriented with the front and rear of bike frame 119. In one embodiment, the saddle 10 orientation is adjusted by the rider.

Once the dropper seatpost assembly 50 is inserted into seat post opening 93 of bike frame 119 and the saddle 10 is properly oriented, the seatpost retaining clamp 25 is then tightened down to "lock" the dropper seatpost assembly 50 into the selected lower post height and saddle 10 orientation. In one embodiment, the "lock" consists of seatpost retaining clamp 25 applying a pressure about seat post opening 93 of bike frame 119 which reduces the size of seat post opening 93 of bike frame 119 causing a frictional coupling of lower post 315 with bike frame 119.

In one embodiment, the upper post of dropper seatpost assembly 50 extends upwards from the bike frame 119 to the head assembly 350 to which the saddle 10 is attached (as indicated by upper seatpost extended length 405a). Dropper seatpost assembly 50 may be made of various materials, such as, but not limited to: steel, aluminum, titanium, carbon fiber, a composite material, and aluminum wrapped in carbon fiber, etc.

In one embodiment, the location of seatpost collar 325 is fixed at or about the point of telescopic interaction between the upper post 310 and the lower post 315 of dropper seatpost assembly 50. In one embodiment, the lower post 315 is inserted into seat post opening 93 of bike frame 119 until the seatpost collar 325 reaches seat post opening 93 of bike frame 119 (as indicated by seating distance 401a). Once fully inserted, the seatpost retaining clamp 25 is used to frictionally couple dropper seatpost assembly 50 with bike frame 119.

In one embodiment, the upper post 310 telescopically slides with respect to lower post 315 upon actuation of rider interface 205 (of Figures 1-3). Thus, the upper post 310 can move up and down to adjust saddle height, while the lower post 315 of dropper seatpost assembly 50 is retained with respect to the frame 119 by seatpost clamp 25. Thus, once oriented by the rider, seatpost retaining clamp 25 does not allow lower post 315 to move (rotationally or vertically) with respect to the bike frame 119.

In another embodiment, the dropper seatpost assembly 50 is inverted. That is, the upper post 310 telescopically slides about the exterior of lower post 315 upon actuation of rider interface 205 (of Figures 1-3). Thus, the upper post 310 can move up and down to adjust saddle height, while the lower post 315 of dropper seatpost assembly 50 is retained with respect to the frame 119 by seatpost clamp 25. Thus, once oriented by the rider, seatpost retaining clamp 25 does not allow lower post 315 to move (rotationally or vertically) with respect to the bike frame 119.

Additional details regarding the operation of a dropper seatpost assemblies are found in US patent 9,422,018 to which reference is made.

Referring now to Figure 4B, a perspective view of a dropper seatpost assembly 50 having an overall length 415 that is different than the overall length 410 of dropper seatpost assembly 50 of Figure 4A is shown in accordance with an embodiment. That is, the dropper seatpost assembly 50 of Figure 4B is an example of a dropper seatpost assembly 50 having one or more different dimensions than that of dropper seatpost assembly 50 of Figure 4A. For example, in Figure 4B, the overall length 415 is less than the overall length 410, the upper seatpost extended length 405b is less than the upper seatpost extended length 405a, and a seating distance 401b that indicates the distance between seatpost retaining clamp 25 and seatpost collar 325 is larger than the seating distance 401a.

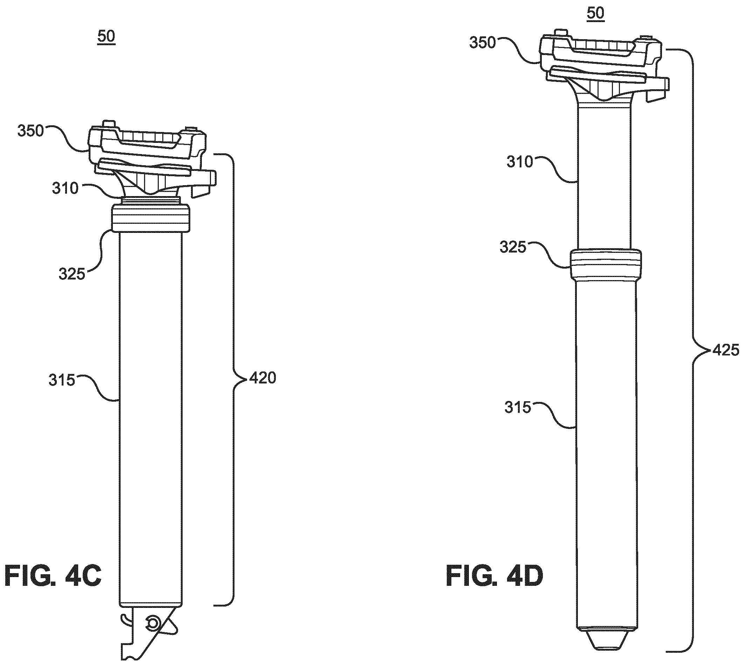

With reference now to Figure 4C, a perspective view of dropper seatpost assembly 50 in a compression position 420 is shown in accordance with one embodiment. In one embodiment, dropper seatpost assembly 50 of Figure 4C illustrates a dropper seatpost assembly at full compression (e.g., the lowest saddle height when the smallest amount of upper post 310 is extended from lower post 315).

In one embodiment, dropper seatpost assembly 50 of Figure 4C illustrates a partial compressed dropper seatpost assembly. For example, a first rider might have the compressed position 420 of the dropper seatpost assembly 50 (e.g., the exposed length of upper post 310) set at a length of 20mm instead of the maximum compressed length (e.g., 0mm, 6mm, 12mm, etc.). In contrast, a second rider might have the compressed position 420 of the dropper seatpost assembly 50 (e.g., the exposed length of upper post 310) set at a length of 50mm instead of the maximum compressed length (e.g., 0mm, 4mm, 10mm, etc.).

Although a number of compressed lengths for the compressed position 420 of dropper seatpost assembly 50 are described, it should be appreciated that other embodiments may include dropper seatpost assemblies with different compressed positions 420 (or different compressed lengths). Similarly, in one embodiment, the dropper seatpost assembly 50 may have a pre-defined number of different selectable compressed positions 420 (e.g., different compressed lengths such as, but not limited to, 0mm, 5mm, 8mm, 20mm, etc.). In one embodiment, the dropper seatpost assembly 50 may have an "infinite" number of different selectable extension lengths (e.g., anywhere from fully compressed to fully extended) that can be selected and/or set by the rider. Thus, it should be appreciated that in one embodiment, the dropper seatpost assembly 50 is able to be set to any saddle height extension length and any saddle height compression length within the operational range of the dropper seatpost assembly.

With reference now to Figure 4D, a perspective view of dropper seatpost assembly 50 in an extended position 425 is shown in accordance with one embodiment. In one embodiment, dropper seatpost assembly 50 of Figure 4D illustrates a full extension of dropper seatpost assembly 50 (e.g., the highest saddle height when the largest amount of upper post 310 is extended from lower post 315).

In one embodiment, dropper seatpost assembly 50 of Figure 4D illustrates a partial extension of dropper seatpost assembly 50. For example, a first rider might have the extended position 425 of the dropper seatpost assembly 50 (e.g., the exposed length of upper post 310) set at a length of 80 millimeters (mm) but not at a maximum extended length (e.g., 120mm, 150mm, 200mm, etc.). In contrast, a second rider might have the extended position 425 of the dropper seatpost assembly 50 set at a length of 100mm but not at the maximum extended length (e.g., 120mm, 150mm, 200mm, etc.).

Although a number of extended lengths for dropper seatpost assembly 50 are described, it should be appreciated that other embodiments may include dropper seatpost assemblies with different maximum extended lengths. Similarly, in one embodiment, the dropper seatpost assembly 50 may have a pre-defined number of different selectable extension positions 425 (or extended lengths), e.g., 25mm, 50mm, 80mm, etc. In one embodiment, the dropper seatpost assembly 50 may have an "infinite" number of different selectable extension positions 425 (or extended lengths e.g., anywhere from almost fully compressed all the way to fully extended) that can be selected and/or set by the rider.

In general, when a change in saddle height of saddle 10 is desired, (e.g., due to hills, terrain, aerodynamics, speed, riding style, etc.), a user will cause the dropper seatpost assembly 50 to lower from the user established saddle height to the drop saddle height by triggering rider interface 205 (or another trigger) while the rider also depresses the saddle 10. Typically, the actuating lever of a dropper seatpost will open a valve or latch in the dropper seatpost assembly 50 so that the dropper seatpost assembly 50 can move up or down.

In one embodiment, dropper seatpost assembly 50 has an air spring and while the rider's weight is used to move it down, the air spring will raise the saddle 10 back to the normal saddle height when the valve or latch internal to the dropper seatpost assembly 50 is opened (such as via rider interface 205). In one embodiment, dropper seatpost assembly 50 is "micro-adjustable". There are two types of micro-adjustable seatposts: (1) seatposts that can be continuously adjusted to an infinite number of positions; and (2) seatposts that can only be adjusted to a predetermined (preprogrammed) number of positions.

For example, with regard to dropper seatpost assemblies that can only be adjusted to a preprogrammed number of positions, the dropper seatpost assembly adjustment positions may be that of the following three positions: normal, middle, and drop. Generally, the rider prefers that the dropper seatpost assembly 50 be in the normal position during a ride over flat terrain, a road surface, or pedaling up small hills on a road surface. In one embodiment, the rider will adjust the dropper seatpost assembly 50 to the "middle" position when the rider still wants to change a riding position to apply more power to the pedals but only needs the saddle to be partially lowered out of the way. This situation may occur while riding down a gentle hill or when the rider anticipates having to climb a hill immediately after a short decent. In one embodiment, the rider will adjust the dropper seatpost assembly 50 to the drop position when the rider is sprinting, ascending a hill in a standing position, traversing bumpy, rocky, or rough terrain, and/or descending a steep hillside. For example, when descending a steep hill, the rider might want the saddle height in the dropped position so they could position themselves rearward of the saddle. By so doing, the rider changes her center of gravity (CG) (and thus the CG of the bike) rearward. By moving the CG rearward, a more stable and safer downhill riding geometry is achieved.

Referring again to Figure 4A and 4B, in one embodiment, for example, the longer dropper seatpost assembly 50 of Figure 4A has a maximum of 210mm range for upper seatpost extended length 405a. In contrast, the shorter dropper seatpost assembly 50 of Figure 4B has a maximum of 175mm range for upper seatpost extended length 405a.

Assuming a user has a preferred saddle height of 195mm above the seatpost clamp 25. In shopping for a dropper seatpost assembly, the user would find dropper seatpost assembly 50 of Figure 4A with a maximum upper seatpost extended length 405a of 210mm and dropper seatpost assembly 50 of Figure 4B with a maximum upper seatpost extended length 405b of 175mm. Prior to the travel spacers disclosed herein, in order to achieve the proper height (e.g., 195mm), the user would not be able to use the 210mm dropper seatpost assembly of Figure 4A as even when the seating distance 401a was minimized, the seat at full up would be 15mm to high. As such, the user would have to use the shorter 175mm dropper seatpost assembly 50 of Figure 4B and then clamp the seatpost with a seating distance 401b of approximately 20mm such that the saddle was at the desired height (e.g., 175mm + 20mm = 195mm). However, by using the shorter seatpost, the user would be limited to a maximum travel of 175mm for their dropper seatpost.

### Travel Adjuster

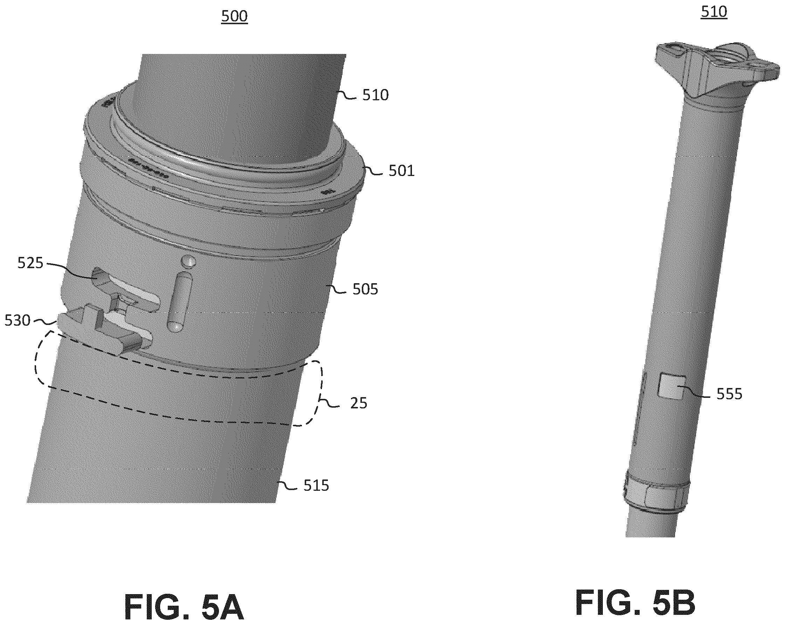

With reference now to Figure 5A, a perspective view of a radial insert travel adjustable dropper seatpost assembly is shown in accordance with an embodiment. Radial insert travel adjustable dropper seatpost 500 includes a lower post 515 with a travel adjustment opening 525 therethrough. An upper post 510 with a travel adjust interface 555 (shown in further detail in Figure 5B). The upper post 510 configured to interactively operate with respect to the lower post 515. At least one radial travel adjust insert 530 installed from an exterior of the lower post 510 and within the travel adjustment opening 525, the at least one radial travel adjust insert 530 to interact with the travel adjust interface 555 of the upper post 510 to reduce a travel distance of the interactive operation of the upper post 510 with respect to the lower post 515. In other words, to modify the operational length of the radial insert travel adjustable dropper seatpost 500. That is, radial travel adjust insert 530 works in conjunction with travel adjust interface 555 to stop axial movement of the upper post 510 at the maximum extension of the radial insert travel adjustable dropper seatpost 500.

In one embodiment, radial travel adjust insert 530 and/or travel adjust interface 555 are made of a material such as, but not limited to, a brass alloy, a metal alloy, plastic, composite material, polymer, stainless steel, spring steel, aluminum, a combination thereof, or the like.

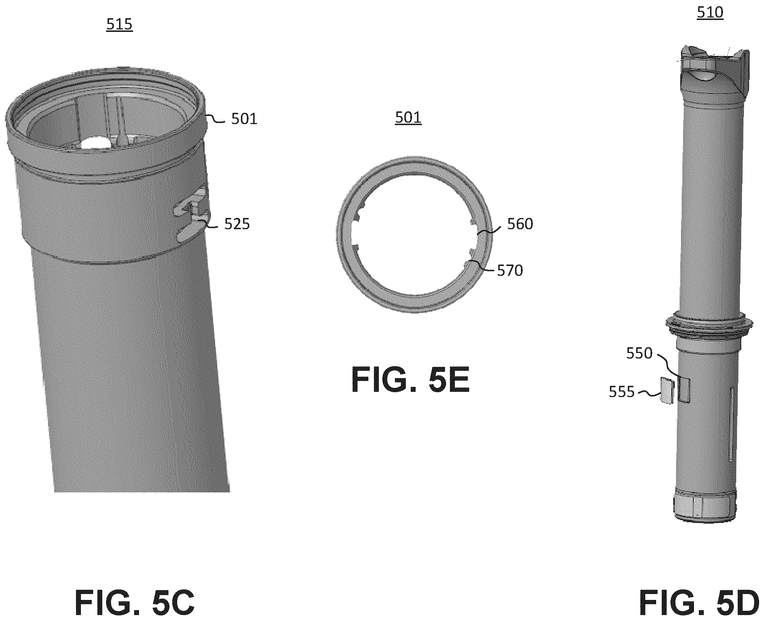

Figure 5B is a side view of the upper post 510 with travel adjust interface 555 shown in accordance with an embodiment. Figure 5C is a side view of the lower post 515 with travel adjustment opening 525 shown in accordance with an embodiment. Figure 5D is a side view of the upper post 510 with a travel adjust interface cavity 550 and optionally the travel adjust interface 555 shown in accordance with an embodiment. Figure 5E is a top view of the internal profile of lower post 515 with a wire channel 560 and pin channel 570 shown in accordance with an embodiment.

For purposes of the following discussion, the radial insert travel adjustable dropper seatpost 500 (of Figures 5A-5D) is similar to dropper seatpost 50 of Figures 1-4D except for a few of the differences discussed herein.

Unlike the dropper seatpost 50 of Figures 1-4D, radial insert travel adjustable dropper seatpost 500 allows the installation of the radial travel adjust insert 530 externally through the lower post 515 without requiring removal of a seatpost collar 325, upper seal retainer 501, and/or any type of disassembly of the dropper seatpost 500. Since the addition to or removal of radial travel adjust insert 530 does not require any type of dropper seatpost disassembly, it is able to be used on different dropper seatposts regardless of whether or not they have a removeable collar, or the like.

Thus, in one embodiment, the radial travel adjust insert 530 disclosed herein is used on a dropper seatpost 50 with seatpost collar 325 such as shown in Figures 1-4D.

In another embodiment, the radial travel adjust insert 530 disclosed herein is used on a dropper seatpost 500 with the upper seal retainer 501 instead of a seatpost collar 325. In general, the upper seal retainer 501 is used to retain the upper seal and maintain the interconnectivity between the upper post 510 and lower post 515 (similar to seatpost collar 325 but without requiring the threads and the additional standoff such attachment methods require). In one embodiment, the upper seal retainer 501 is pressed, locked, fastened, or otherwise coupled with the lower seat post 515 and is not meant to be user removable. For example, Fox Factory, Inc.'s TRANSFER NEO^{™} seatpost has an upper seal retainer 501 that should not be removed by a consumer due to wiring and/or other constraints.

By allowing the radial travel adjust insert 530 to be installed radially and externally through the travel adjustment opening 525 of lower post 515, a user (or installer) is able to see and install the radial travel adjust insert 530 without disassembly of the dropper seatpost. In so doing, the dropper seatpost components are not subject to damage during disassembly, factory set grease is not disturbed, and the internals remain clean from debris and/or contamination.

Thus, the radial travel adjust insert system disclosed herein is able to be used on a plurality of different dropper seatposts, with different configurations, and with different components such as those used to provide axial orientation and/or a rotational orientation of the upper post 310 with respect to the lower post 315. Features and elements such as those found in the dropper seatpost assemblies described in US Patents 9,422,018 and 12,269,548, to which reference is made.

In general, the dropper seatpost 500 extends to top out in the default condition it can have a top out on internal components or top out through pins/keys on the upper bushing/a top out plate or some other mechanism (described in US Patents 9,422,018 and 12,269,548, to which reference is made). To decrease the dropper seatpost 500 travel the dropper seatpost 500 is compressed and a radial travel adjust insert 530 is inserted through travel adjustment opening 525. The seatpost will now top out between the radial travel adjust insert 530 and the travel adjust interface 555.

In one embodiment, travel adjustment opening 525 is a slot, a pocket, a groove, or the like that extends through lower post 515.

With reference again to Figure 5B, in one embodiment, the travel adjust interface assembly includes a negative extrusion 550 formed in the upper post 510. A separate component (e.g., travel adjust interface 555) is inserted in the negative extrusion 550 and extends therefrom to interact with radial travel adjust insert 530.

In one embodiment, the travel adjust interface assembly includes a positive extrusion 550 formed in the upper post 510. In the case of a positive extrusion 550, there is no requirement for a separate component (e.g., travel adjust interface 555) as the positive extrusion 550 extends outward from the upper post 510 to interact with radial travel adjust insert 530.

In general, the travel adjust interface 555 being present on the upper post 510 will not modify the extension or compression of the dropper seatpost assembly. It is not until the radial travel adjust insert 530 is installed that the reduced seatpost extension is obtained.

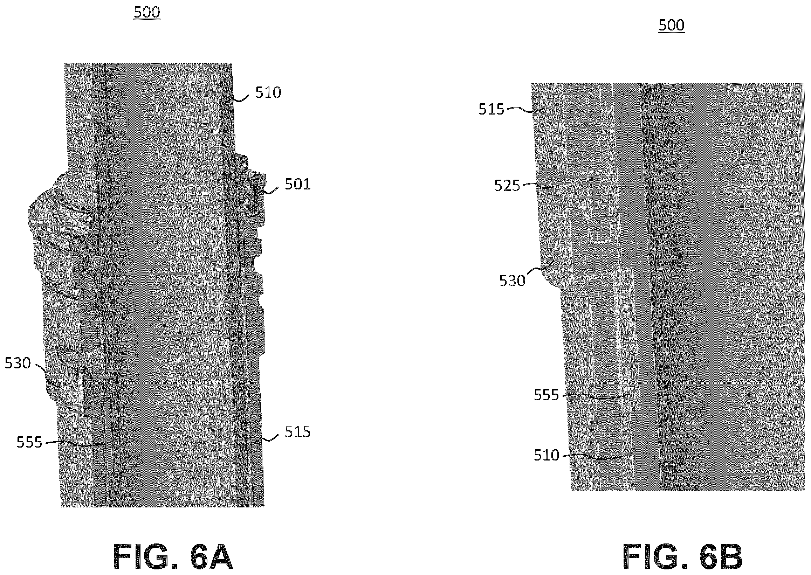

Referring now to Figures 6A and 6B, cutaway side views of the radial insert travel adjustable dropper seatpost 500 are shown in accordance with an embodiment. In Figures 6A and 6B, the interactivity between travel adjust interface 555 and radial travel adjust insert 530 is shown.

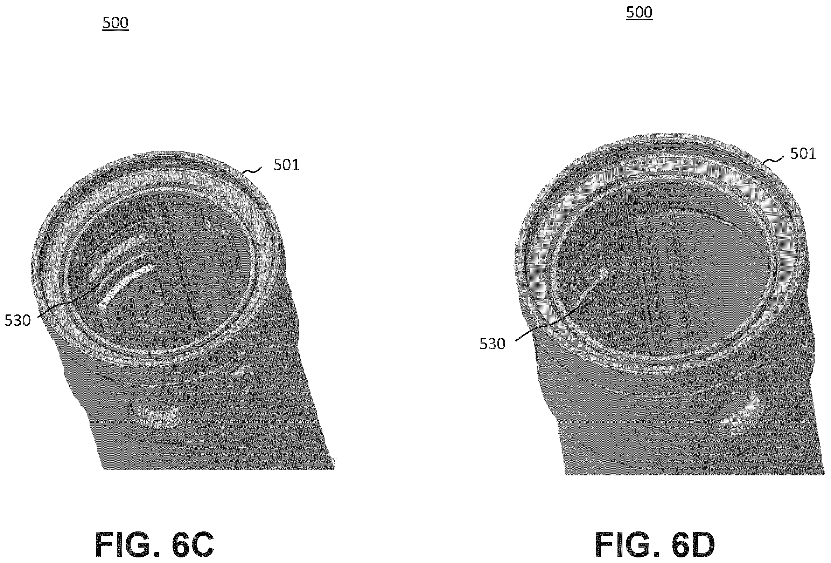

Figures 6C and 6D are top perspective cutaway views of radial insert travel adjustable dropper seatpost 500 showing different levels of surface area interaction provided by different types of radial travel adjust insert(s) 530 shown in accordance with an embodiment. In one embodiment, different levels of surface area interaction allow the radial travel adjust insert 530, the travel adjust interface 555, and/or the different channels, grooves, and/or other features of lower post 515 and upper post 510 to maintain one or both of an axial orientation and a rotational orientation of the upper post with respect to the lower post.

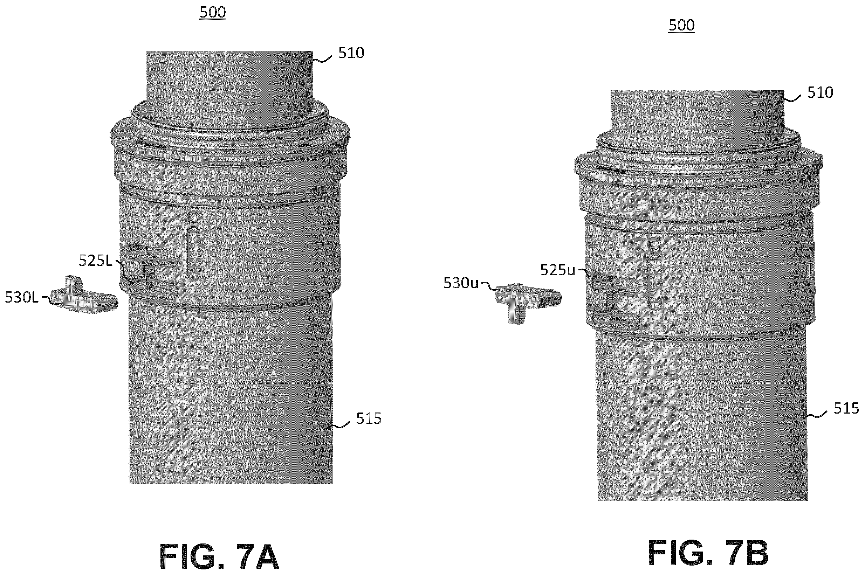

With reference now to Figure 7A and 7B, a side view of the radial insert travel adjustable dropper seatpost 500 with a plurality of travel adjustment opening(s) 525 or a geometric figure of travel adjustment opening 525 is shown. In one embodiment, the plurality of travel adjustment opening(s) 525 located at different distances axially along the lower post 515 provide a selectable plurality of different reduced travel distances of the interactive operation of the upper post 510 with respect to the lower post 515.

For example, in Figure 7A, the radial travel adjust insert 530L is installed in the lower travel adjustment opening 525L. In contrast, in Figure 7B, the radial travel adjust insert 530u is installed in the upper travel adjustment opening 525u. By including a plurality of travel adjustment opening(s) 525, such as shown in Figures 7A and 7B, the reduced travel height of the radial insert travel adjustable dropper seatpost 500 can be modified based on which opening the radial travel adjust insert 530 is installed. For example, upper travel adjustment opening 525u might provide a reduction of 5mm while lower travel adjustment opening 525L would provide a reduction of 10mm.

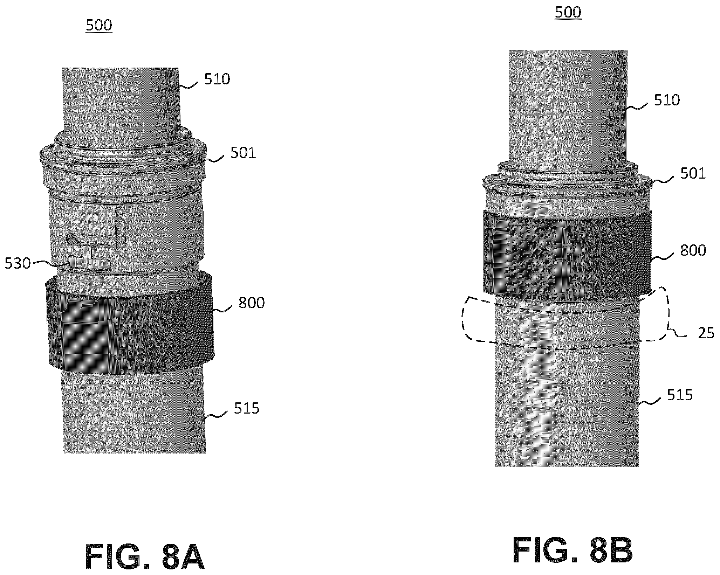

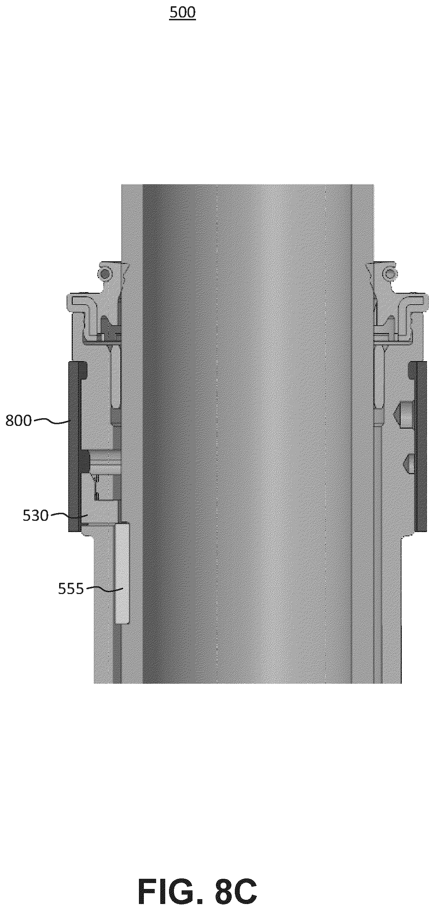

With reference now to Figure 8A, a side view of the radial insert travel adjustable dropper seatpost 500 with at least one travel adjustment opening 525 and an external retainer 800 is shown in accordance with an embodiment. Figure 8B shows a side view of the radial insert travel adjustable dropper seatpost with the external retainer over the travel adjustment opening 525 in accordance with an embodiment. Figure 8C is a cutaway side view of the radial insert travel adjustable dropper seatpost with an external retainer over at least one travel adjustment opening in accordance with an embodiment.

In one embodiment, external retainer 800 acts as a cover over travel adjustment opening 525 to keep material from entering into the internals of the radial insert travel adjustable dropper seatpost 500. Thus, the external retainer 800 would be used regardless of whether or not a radial travel adjust insert 530 is used to reduce the extended length of radial insert travel adjustable dropper seatpost 500.

However, when radial travel adjust insert 530 is inserted through travel adjustment opening 525 the external retainer 800 will also be able to retain the radial travel adjust insert 530 within the travel adjustment opening 525.

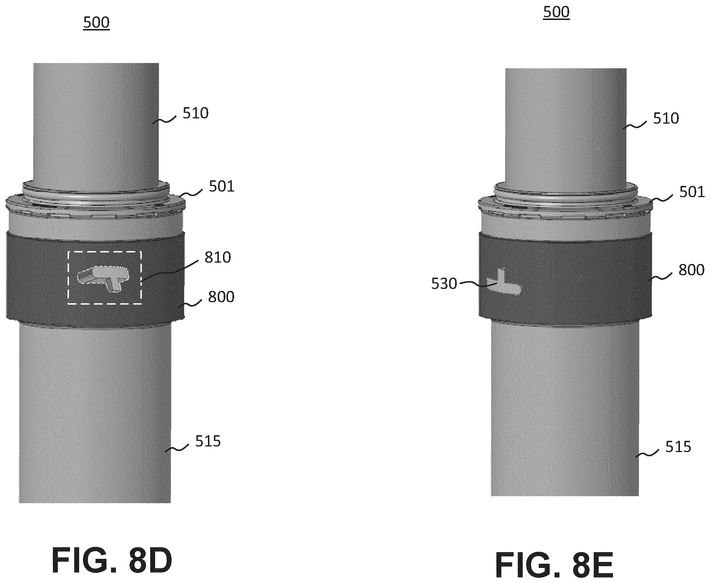

Referring now to Figure 8D, a side view of the radial insert travel adjustable dropper seatpost 500 with an external retainer 800 including a storage location 810 for storing at least one radial travel adjust insert 530 shown in accordance with an embodiment. In one embodiment, by providing a storage location 810, the radial travel adjust insert 530 will be stored therein when not installed within travel adjustment opening 525. In one embodiment, external retainer 800 is a pocket, pouch, or the like. In another embodiment, external retainer 800 could be a retaining component (e.g., cutout, opening, or the like) that allows the radial travel adjust insert 530 to be inserted therein and held fast.

Referring now to Figure 8E, a side view of the radial insert travel adjustable dropper seatpost 500 with an external retainer 800 including at least one radial travel adjust insert 530 coupled therewith and deployable therefrom is shown in accordance with an embodiment. For example, the radial travel adjust insert 530 would be held by external retainer 800 and when the user wanted to deploy radial travel adjust insert 530 to reduce the extended height of radial insert travel adjustable dropper seatpost 500, the user could click on or otherwise press (e.g., like a ballpoint pen or the like) the radial travel adjust insert 530 and it would deploy into travel adjustment opening 525. Similarly, by clicking on the deployed radial travel adjust insert 530 it would retract out of travel adjustment opening 525 and back to the storage location within external retainer 800.

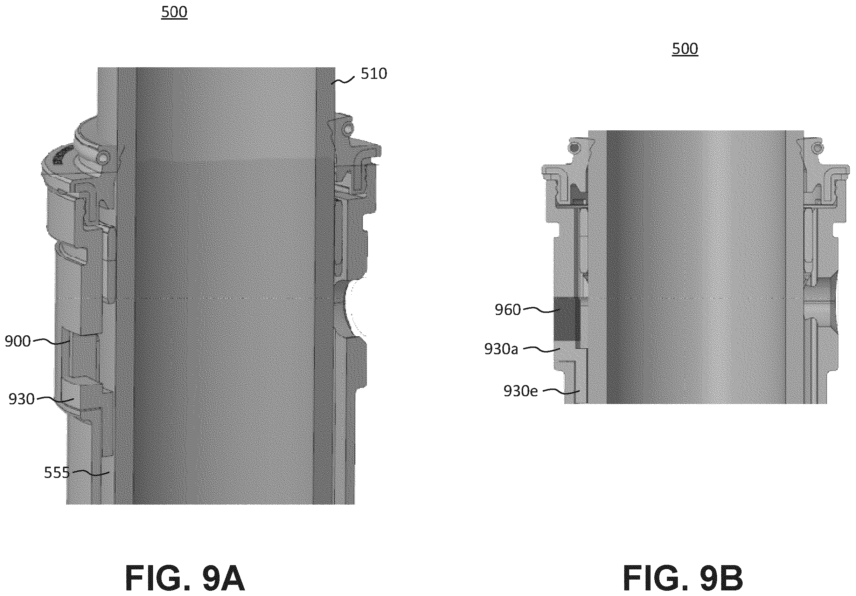

With reference now to Figure 9A, a perspective cutaway view of the radial insert travel adjustable dropper seatpost 500 with a larger travel adjustment opening 900 and an elongated radial travel adjust insert 930 is shown in accordance with an embodiment.

Referring now to Figure 9B, a side cutaway view of the radial insert travel adjustable dropper seatpost 500 with a larger travel adjustment opening 900, an elongated radial travel adjust insert 930, and a spacer 960 to fill the remaining opening in the travel adjustment opening shown in accordance with an embodiment. Although shown in Figure 9B, spacer 960 could be used to fill in any of the travel adjustment opening 525s not filled by the radial travel adjust insert 530. Although shown above elongated radial travel adjust insert 930, in one embodiment, spacer 960 could be installed below elongated radial travel adjust insert 930. For example, if the second portion 930e of elongated radial travel adjust insert 930 was 8mm, a 5mm spacer inserted below the elongated radial travel adjust insert 930 would reduce the working length of elongated radial travel adjust insert 930 to 3mm.

Elongated radial travel adjust insert 930 includes a first portion 930a to removably couple with the travel adjustment opening 525 of the lower post 515 and a second portion 930e to extend axially along the interior of lower post 515 toward the travel adjust interface 555 of the upper post 510 to further reduce the travel distance of the interactive operation of the upper post 510 with respect to the lower post 515.

For example, a radial travel adjust insert 530 inserted into larger travel adjustment opening 900 would result in the radial insert travel adjustable dropper seatpost 500 maximum extension length reduced by 10mm. Utilizing the elongated radial travel adjust insert 930, the maximum extension length of radial insert travel adjustable dropper seatpost 500 could be further reduced by the length of the second portion 930e of elongated radial travel adjust insert 930.

For example, if the maximum extension length of radial insert travel adjustable dropper seatpost 500 was to be reduced 15mm then an elongated radial travel adjust insert 930 with a second portion 930e length of 5mm would be used. If the maximum extension length of radial insert travel adjustable dropper seatpost 500 was to be reduced 18mm then an elongated radial travel adjust insert 930 with a second portion 930e length of 8mm would be used. In one embodiment, the length of second portion 930e could be adjustable using a telescoping ability such that the length of second portion 930e would be adjustable within a range of lengths. As such, instead of having to find (or maintain a collection of a plurality of) an elongated radial travel adjust insert 930 with a specific second portion 930e length, the modifiable length elongated radial travel adjust insert 930 would provide a single component with a plurality of adjustable lengths.

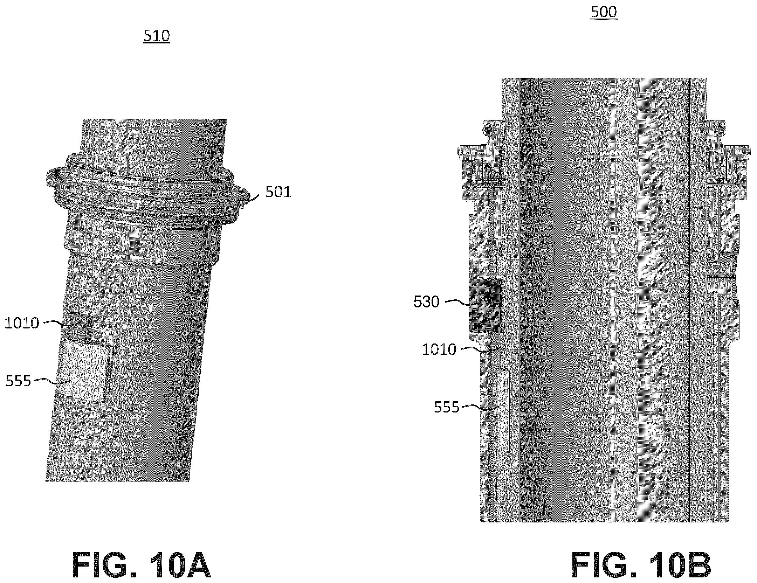

Referring now to Figure 10A, a perspective view of upper post 510 with travel adjust interface 555 and an additional spacer chip 1010 is shown in accordance with an embodiment. Figure 10B is a side cutaway view of the radial insert travel adjustable dropper seatpost 500 with travel adjust interface 555 and additional spacer chip 1010 shown in accordance with an embodiment.

In one embodiment, spacer chip 1010 is configured to fit through the travel adjustment opening 525 of the lower post 515 and couple between the radial travel adjust insert 530 and the travel adjust interface 555 to reduce the travel distance of the interactive operation of the upper post 510 with respect to the lower post 515. In other words, to reduce the maximum extension length of radial insert travel adjustable dropper seatpost 500. In one embodiment, multiple spacer chip(s) 1010 are installed to modify the maximum extension length of radial insert travel adjustable dropper seatpost 500.

In one embodiment, an impact protector (or coating) is provided at the end of one or more of travel adjust interface 555, radial travel adjust insert 530, elongated radial travel adjust insert 930, spacer chip 1010, travel adjustment opening 525 and/or larger travel adjustment opening 900. The impact protector is used to absorb, disseminate, or otherwise reduce and/or remove any impact forces (such as those generated when the radial travel adjust insert 530 impact against travel adjust interface 555 during the dropper seatpost assembly 50 returning to an extended position) from damaging one or more of travel adjust interface 555, radial travel adjust insert 530, elongated radial travel adjust insert 930, spacer chip 1010, travel adjustment opening 525 and/or larger travel adjustment opening 900. The damage could be a dent, chip, burr, scrape, deformation, or the like. In one embodiment, the damage could deleteriously affect the operation of the dropper seatpost due to the damaged component, the introduction of the contaminant materials into the dropper seatpost assembly, and the like.

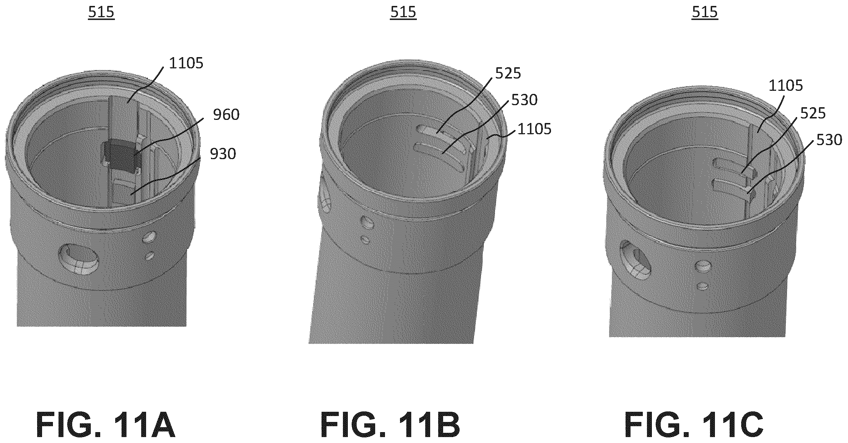

With reference now to Figure 11A, a top perspective view of an internal profile of the lower post 515 is shown in accordance with an embodiment. Figure 11B is a top perspective view of another internal profile of the lower post 515 in accordance with an embodiment. Figure 11C is a top perspective view of yet another internal profile of the lower post in accordance with an embodiment.

In Figure 11A, the travel adjustment opening 900 and radial travel adjust insert 930 are formed within a groove 1105 on the inner diameter (ID) of lower post 515. In Figure 11B, the travel adjustment opening 525 and radial travel adjust insert 530 are located in the radial space between the upper post 510 outer diameter (OD) and the lower post 515 ID but not within groove 1105. In Figure 11C, the travel adjustment opening 525 and radial travel adjust insert 530 are located in the radial space between the upper post 510 outer diameter (OD) and the lower post 515 ID and are partially in the radial space and partially within groove 1105.

Although Figures 5A through 11C show one travel adjust interface 555 and radial travel adjust insert 530 it should be appreciated that in another embodiment, there may be a plurality of travel adjustment opening(s) 525 located radially about the lower post 515. A plurality of travel adjust interface(s) 555 located radially about the upper post. A plurality of radial travel adjust insert(s) 530 removably coupleable with the plurality of travel adjustment openings of the lower post 515.

For example, there might be two travel adjustment opening(s) 525, travel adjust interface(s) 555, and/or radial travel adjust insert(s) 530 symmetrically distributed radially about the radial insert travel adjustable dropper seatpost 500.

In another embodiment, there could be two or more travel adjustment opening(s) 525, travel adjust interface(s) 555, and/or radial travel adjust insert(s) 530 distributed radially about the radial insert travel adjustable dropper seatpost 500. In general, a plurality of radial inserted travel adjustable elements would be used to provide adjustments such as different levels of surface area interaction, reduce any angular moments/movements that might occur when there is only one set of radial inserted travel adjustable elements, provide more robust stoppage performance for different levels of utilization, etc.

For example, an everyday bike rider might not find any difference in performance with a single set of radial inserted travel adjustable elements while a professional downhill rider would encounter impacts, forces, and the like which would require an additional level of security provided by a plurality of radially distributed travel adjustable elements.

Thus, the radial insert travel adjustable dropper seatpost 500 disclosed herein provides a way to modify the maximum extension length of radial insert travel adjustable dropper seatpost 500 without requiring any disassembly of the radial insert travel adjustable dropper seatpost 500. Moreover, the radial insert travel adjustable dropper seatpost 500 allows for a plurality of different maximum extension lengths to be obtained by the use of different shaped radial travel adjust insert(s) 530, different spacer 960 radial travel adjust insert 530 installation orientations, different travel adjustment opening 525 shapes and/or a plurality of travel adjustment opening(s) 525, different length elongated radial travel adjust insert(s) 930, one or more spacer chip(s) 1010, and various combinations thereof.

In so doing, a dropper seatpost maximum extension length can be modified at home, enroute, in the field, etc., without requiring disassembly of the radial insert travel adjustable dropper seatpost 500. This will allow the maximum extension length to be modified for different riders of the same bike, for different bike use cases, and the like without concern about losing parts, without introducing dirt or other particulates to the internals of the radial insert travel adjustable dropper seatpost 500, and without requiring any tools.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A radial insert travel adjustable dropper seatpost assembly comprising:
a lower post, said lower post comprising a travel adjustment opening therethrough;
an upper post configured to interactively operate with respect to said lower post, said upper post comprising a travel adjust interface; and
at least one radial travel adjust insert installed from an exterior of said lower post and within said travel adjustment opening, said at least one radial travel adjust insert to interact with said travel adjust interface of said upper post to reduce a travel distance of said interactive operation of said upper post with respect to said lower post.

2. The radial insert travel adjustable dropper seatpost assembly of Claim 1, further comprising:
said at least one radial travel adjust insert to interact with said travel adjust interface of said upper post to maintain one or both of an axial orientation and a rotational orientation of said upper post with respect to said lower post.

3. The radial insert travel adjustable dropper seatpost assembly of Claim 1 or 2, wherein said travel adjust interface comprises:
either:
a negative extrusion formed in said upper post; and
a separate component inserted in said negative extrusion;
or:
a positive extrusion formed in said upper post.

4. The radial insert travel adjustable dropper seatpost assembly of Claim 1, 2 or 3, further comprising:
a plurality of travel adjustment openings located at different distances axially along said lower post, to provide a selectable plurality of different reduced travel distances of said interactive operation of said upper post with respect to said lower post.

5. The radial insert travel adjustable dropper seatpost assembly of any preceding Claim, further comprising:
a plurality of travel adjustment openings located radially about said lower post;
a plurality of travel adjust interfaces located radially about said upper post; and
a plurality of radial travel adjust inserts removably coupleable with said plurality of travel adjustment openings of said lower post.

6. The radial insert travel adjustable dropper seatpost assembly of Claim 5, wherein said plurality of travel adjustment openings are symmetrically about said lower post.

7. The radial insert travel adjustable dropper seatpost assembly of any preceding Claim, further comprising:
an upper seal between said upper post and said lower post;
an upper seal retainer, such as a collar, to retain said upper seal, said upper seal retainer coupled with said lower post at an end of said lower post interactively operating with said upper post; and
said at least one radial travel adjust insert installable without requiring a removal of said upper seal or said upper seal retainer.

8. The radial insert travel adjustable dropper seatpost assembly of any preceding Claim, further comprising:
a spacer chip, said spacer chip configured to fit through said travel adjustment opening of said lower post and couple between said at least one radial travel adjust insert and said travel adjust interface of said upper post to reduce said travel distance of said interactive operation of said upper post with respect to said lower post.

9. The radial insert travel adjustable dropper seatpost assembly of any preceding Claim, wherein said at least one radial travel adjust insert comprises:
a first portion to removably couple with said travel adjustment opening of said lower post; and
a second portion to extend within said lower post toward said travel adjust interface of said upper post to further reduce said travel distance of said interactive operation of said upper post with respect to said lower post, and optionally wherein a length of said second portion is adjustable.

10. The radial insert travel adjustable dropper seatpost assembly of any preceding Claim, further comprising:
an external retainer to retain said at least one radial travel adjust insert within said travel adjustment opening.

11. The radial insert travel adjustable dropper seatpost assembly of Claim 10, wherein said external retainer further comprises:
a radial travel adjust insert storage compartment coupled with said external retainer to store said at least one radial travel adjust insert when said at least one radial travel adjust insert is not installed within said travel adjustment opening.

12. A vehicle comprising a radial insert travel adjustable dropper seatpost assembly as claimed in any preceding Claim.

13. The vehicle of Claim 12 in the form of a bicycle, such as, but not limited to, road bike, mountain bike, gravel bike, unicycle, tricycle and electric bike (e-bike).

14. A kit of parts comprising a radial insert travel adjustable dropper seatpost assembly as claimed in any of Claims 1 to 11, and at least one radial travel adjust insert for reducing a travel distance of said interactive operation of said upper post with respect to said lower post.

15. The kit of parts of Claim 14, further comprising at least one spacer chip to reduce said travel distance of said interactive operation of said upper post with respect to said lower post.
